# EUROPEAN PATENT SPECIFICATION

(11) **EP 1 427 977 B1**
(45) Date of publication and mention of the grant of the patent: **11.10.2006**
(21) Application number: 02727819.1
(22) Date of filing: 18.04.2002
(51) Int. Cl.: F26B 3/20, B01D 1/22

(54) **THIN FILM CYCLIC CONTINUOUS DRYER**
ZYKLISCHER DÜNNFILM-DURCHLAUFTROCKNER
SECHOIR CONTINU CYCLIQUE A COUCHE MINCE

(30) Priority: 18.04.2001 IT MI20010082
(43) Date of publication of application: 16.06.2004
(73) Proprietor: ELEP s.a.s. di Cabiddu Rachele & C., 27058 Voghera (PV) (IT)
(72) Inventor: BOBBIESI, Giuseppe, 20011 Corbetta (IT)
(74) Representative: Beneduce, Gianna
(86) International application number: PCT/IB2002/001325
(87) International publication number: WO 2002/084189

(56) References cited:
- EP-A- 0 225 314
- DE-C- 205 064
- GB-A- 494 847
- JP-A- 63 141 603
- US-A- 2 945 819
- US-A- 3 190 817
- PATENT ABSTRACTS OF JAPAN vol. 010, no. 120 (C-343), 6 May 1986 (1986-05-06) & JP 60 244301 A (HITACHI SEISAKUSHO KK), 4 December 1985 (1985-12-04)
- PATENT ABSTRACTS OF JAPAN vol. 003, no. 091 (C-054), 3 August 1979 (1979-08-03) & JP 54 067571 A (HITACHI LTD), 31 May 1979 (1979-05-31)

## Description

Drying up to fine powder of any alimentary, chemical, biological, pharmaceutical liquid, even sensible to the temperature, with solids in suspension or in solution, having any concentration of dry material and having any viscosity (provided it is pumpable) securing low contact times and operating either under pressure or under vacuum, at low temperatures, according to the requirements of the process to be performed.

### Background art

Many types of dryers processing different products and operating according to different principles are known.

For liquid products to be dried, with any solid content, even in solution, with any viscosity (but pumpable), which cannot tolerate particular temperatures for periods of time relatively long, which must be dried up to powder, the sole typology of effective dryer, up-to-date known, is the spray-dryer. This type of dryer, however, requires large rooms, considerable air flow rates, dust powder collecting systems, odour knockdown systems, meanwhile its energy efficiency is low.

British Patent n°494 847 describes an apparatus and the relevant method for producing powders from liquids, essentially milk, consisting of a cylindro-conical vertical vessel within which rotates a hollow shaft. The liquid product flows inside the hollow shaft and is sprayed, throught a series or nozzles, against a heated wall by means of atomized air or inert gas previously depurated in a washing passage. The apparatus is maintained under vacuo. United States Patent n°2, 945, 819 describes an apparatus and the relevant process employed for producing soap from a fluid soap. It consists in a cylindrico-conical vessel within which rotates a hollow shaft. The fluid soap flows inside the hollow shaft and it is sprayed through a plurality of nozzles against the inner heated cylindrical surface; the soap powder adehered to the surface is then scraped therefrom by means of a knife scraper and finally obtained in the desired form. The apparatus is maintained under vacuo.

The dryer of the present invention occupies small room, it requires a reduced investment, it doesn't need air supply, it doesn't require considerable powder and odours knockdown systems, it has a high energy efficiency, it can operate under vacuum and consequently at low temperatures and it offers the advantage of being used even to preconcentrate the liquid product to be dried, so reducing its quantity and increasing the overall efficiency.

### Disclosure of the invention

For a better understanding of the object of the present invention a description is given here below with reference to the attached figures wherein:

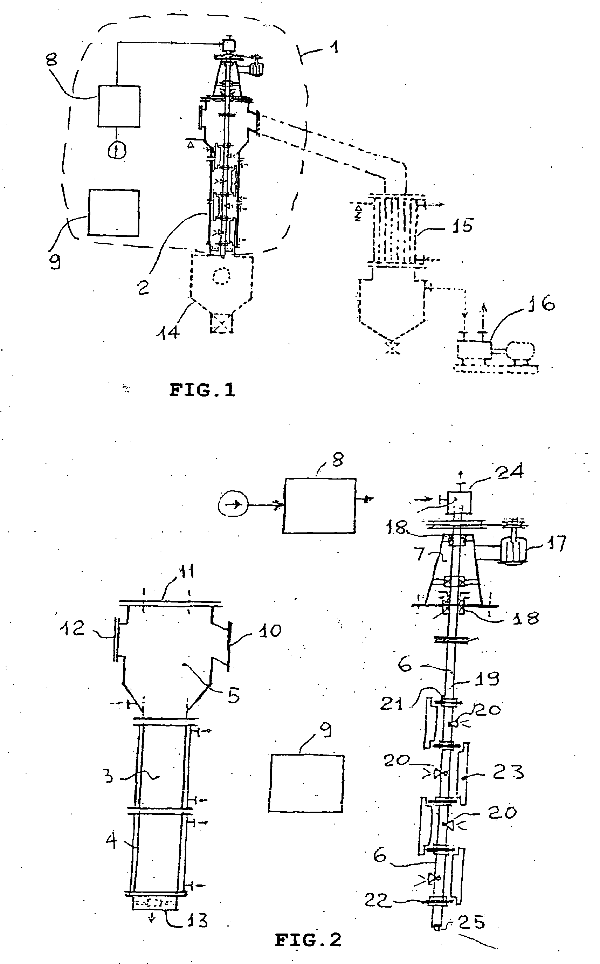

Figure 1 represents a sketch of the dryer incorporated into a sketch of a drying plant;
Figure 2 represents a sketch of the body and of the rotor of the dryer, wherein all their components are specifically shown;
Figure 3 represents an axial view section of a part of the rotor shaft carrying the sleeves with vane bearing rims;
Figure 4 represents a view section, perpendicular to the axis of the rotor of the dryer, of a vane with its replaceable blade;
Figure 5 represents a sketch of the view section of the dryer, made in a plane perpendicular to the vertical axis of the dryer and it shows the geometry of the various components, cylinder, rotor shaft, rims and vanes;
Figure 6 represents a sketch of a single section of the rotor between two sleeves with the relevant vane and the correspondent part of the cylinder;

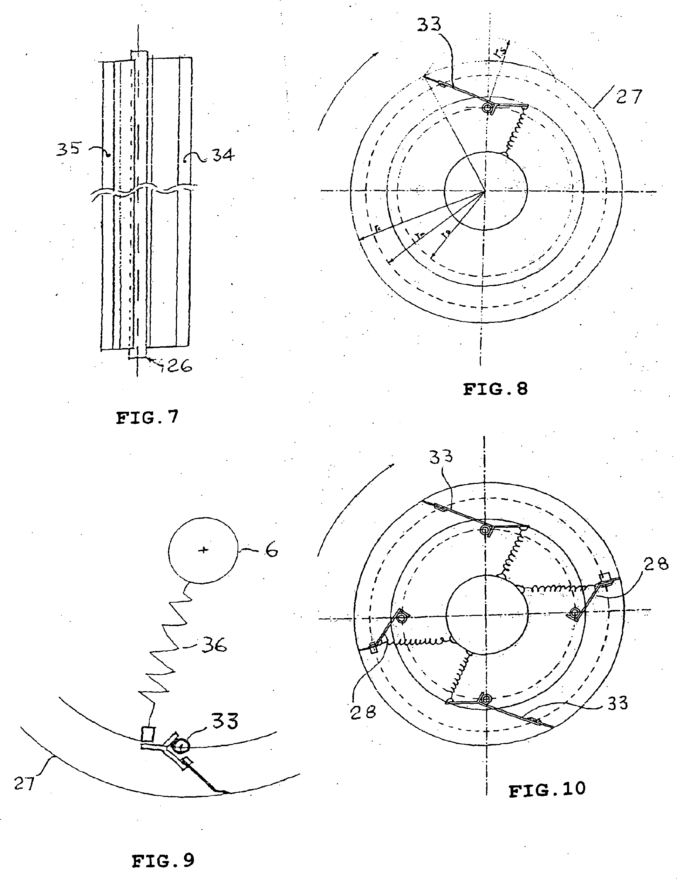

Figure 7 represents a. sketch of a smearing vane;
Figure 8 represents a view in a plane perpendicular to the vertical axis of the drier with a smearing vane assembled on the rotor;
Figure 9 represents a sketch of a detail of Figure 8 with a view section in a plane perpendicular to the vertical axis of the dryer of the smearing vane;
Figure 10 represents a sketch of a combination of scraping and smearing vanes on the same rotor;
Figure 11 represents a view section of the rotor along the plane containing its vertical axis, including a self-cleaning, self-closing nozzle for the product distribution on the inner cylinder wall.
Figures 12,13 and 14 represent different operating cycles, as examples, of the thin film cyclic continuous dryer of the invention, each figure being referred to possible operating cycles to fit with different.conditions or products.

The object of the invention is a thin film cyclic continuous dryer (1) consisting of: a static body (2) which is made by the cylinder (3), provided with a heating jacket (4) and divided into sections, and by an expansion head (5); a complex rotor (6), provided with a stirrer-type spider (7) motorization having a fed product distribution system; a product to be dried feeding group (8); and a computerised power and control board (9).

The dryer (1) can be incorporated into a common thin film evaporation plant of already known types, operating either under pressure or under vacuum according to the requirements of the process to be performed. The geometry of the cylinder (3) and of the rotor (6) allows to operate as thin film dryer, producing dried material in powder form, avoiding highly powerful motorizations and high stresses, and with contact times limited in a range not much over ten seconds. The dryer (1) can operate even as a common high efficiency concentrator-evaporator allowing, if convenient, a preconcentration of the liquid to be dried, so reducing the liquid quantity and increasing its overall capacity to produce dry material.

The vertical cylinder (3) with the external heating jacket (4), is fitted to an overstanding expansion head (5), which has an outlet opening (10), for discharging of the vapour produced during drying, an overhead fitting (11) for the rotor spider (7) and a manhole (12). The cylinder (3) is vertically installed and open in its lower part (13) to discharge the dried product; it may be fitted to a powder recovery tank (14). The outlet opening (10) may be fitted to a condenser (15) and to a suction equipment (16).

The rotor (6) consists of: a motor group (17), a spider (7) with seal (18), a hollow shaft (19), provided with self-cleaning, self-closing nozzles (20), sleeves (21) with rims (22) bearing vanes (23); a product distribution system, a rotary fitting (24) and a drain (25).

The motor group (17) is of the type and capacity suitable to the dryer dimension. The spider (7) is designed according to the requirements of the motor group (17) and to the length of the shaft (19). The seal (18) may be of ring, packing, mechanical type, etc. The shaft (19) is hollow and connected at the top to a rotary fitting (24) for the product feeding and it has a drain (25) positioned at the bottom, for cleaning.

The sleeves (21) with the rims (22) bearing the vanes (23) are fitted on the shaft (19), at predetermined distances, according to the length of the vanes (23), and subdivide the rotor into two or more sections.

The rims (22) can hold two or more vanes (23), where three vanes, for each type of vane, is the optimum number.

Consequently, each section of the rotor (6) has two or more vanes (23), with an optimum of three, for each type of vane. The vanes (23) are fixed to the rims (22) in different ways, preferably by a pin (26), and they are specifically described further on.

The product distribution system can be of several types: the product is fed, throughout the hollow shaft (19) and the self-cleaning, self-closing nozzles (20) in each of the section in which the rotor (6) has been subdivided by the sleeves (21). The rotary fitting (24) and the drain (25) are common commercial devices:

The vanes (23) are key devices of the dryer of the invention. In fact their geometry is essential to utilise the centrifugal force caused by the rotation of the rotor (6) smearing and not scraping of the inner wall (27) of the cylinder (3) during the product distribution phase; a moderate scraping or smearing whenever the dryer (1) is exceptionally used as a concentrator; more or less heavy scraping and not smearing whenever the dryer (1) is properly used as a dryer and the cycle is in the dry product scraping phase.

Furthermore the vanes (23) should not warp and they have to be light as much as possible to allow for low power requirements during the rotor acceleration and deceleration phases; their geometry prevents them from slipping out from the contact with the inner wall (27) of the cylinder (3) as a consequence of the tear of their scraping part.

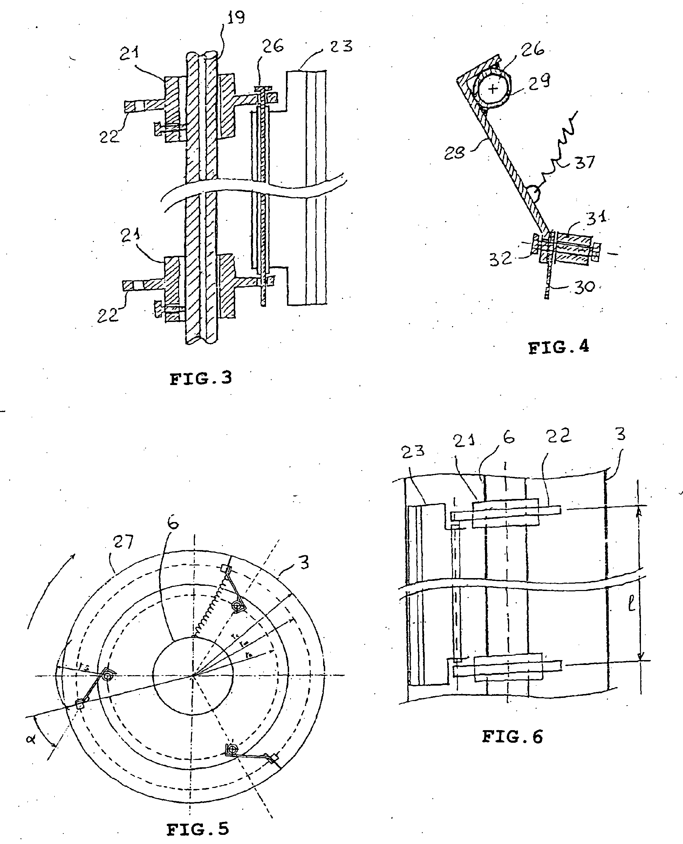

The vanes (23) may have different shapes. The most convenient one for the scraping vanes (28) is shown, in particular, in Figure 4: by a tube with a pin (26) which performs as a hinge (29), two bends which make their structure more rigid, a replaceable blade (30), an index mass (31) and several fixing screws (32).

Besides the type above described, i.e. the scraping vane (28), different vane types may exist, with different functions. One of these type is the smearing vane (33) made of any material and even composite, with replaceable and even teflon coated smearing part (34) to reduce any encrusting possibility to a minimum. The smearing type vane (33) is made of a pin (26) at one side of which there is the smearing part (34) of the vane (23) and, on the other side, there is a mass (35).

The smearing vane (33), on the side where the mass (35) is fixed, is connected by a pretensioned spring (36) to the rotor shaft (19) and, whenever the rotor (6) rotates at low velocity, the vane (33) slips on the inner cylinder wall (27) and, whenever the speed is higher it detaches: that is, it operates exactly in an opposite way versus the scraping vane (28).

The combination on the same rotor (6) of smearing vanes (33) with scraping vanes (28) allows to perform the best drying cycle.

In Figures 5 and 6 is shown the geometry of the various parts of the dryer, cylinder (3), rotor (6), vanes (23): r_{c} is the cylinder inner circumference radius; rₘ is the vane mass barycentric radius; rₐ is the vane hinge radius; rₛ is vane slipping out radius; l is the rotor section height; α is the angle between r_{c} and the vane dip.

The geometry of the dryer of the invention is such that:
rₘ = (0,5÷0,9)r_{c}; rₐ = (0,2÷0,7)r_{c}; rₛ = [(1,01÷1,20)r_{c}]- rₐ; l = 300÷900mm; r_{c} = (0.2÷1)l ; α = 20°÷70°.

To make sure that the scraping vanes (28) do not scrape the product at the lower rotor velocity, the same is equipped with a pulling back spring (37) fixed to the shaft (19) of the rotor (6) and to the vane (28) to contrast the centrifugal force caused by the vane mass whenever the rotor (6) rotates at the minimum velocity, but not whenever it rotates at the maximum velocity.

The product feeding is made throughout the hollow shaft (19) of the rotor (6). The distribution is made by self-cleaning, self-closing nozzles (20) fixed on the same shaft (19), placed in correspondence with each rotor section. By the rotation of the rotor (6) the product is consequently distributed uniformly on the inner wall (27) of the cylinder (3). The residual pressure inside the nozzles, whenever the product supply is stopped, is released by an automatic valve, placed on the feeding pipe or placed on the head of the rotary fitting (24). The product feeding is pulsating and associated to a cyclic rotor running, meanwhile the same rotor (6) rotates at a chosen minimum velocity so that the vanes (23) do not scrap the product during its distribution and during the subsequent drying phase (40bis), until the drying is completed and, only at that time, thanks to the increase of the angular velocity of the rotor (6), they start scraping (41). The pulsation, according to the operating cycle, may be obtained by an automatic valve placed before the rotary fitting (24).

A fundamental characteristic of the present invention is the cyclic running of the dryer. The cycle is composed of: a feeding and distribution phase (39) of the product on the inner cylinder wall (27), being this phase as short as possible; a product drying phase (40bis) on the inner cylinder wall (27) and a dried product scraping phase (42) with gravity powder falling down to the equipment bottom. The operating cycle (44) is controlled by the power and control board (9).

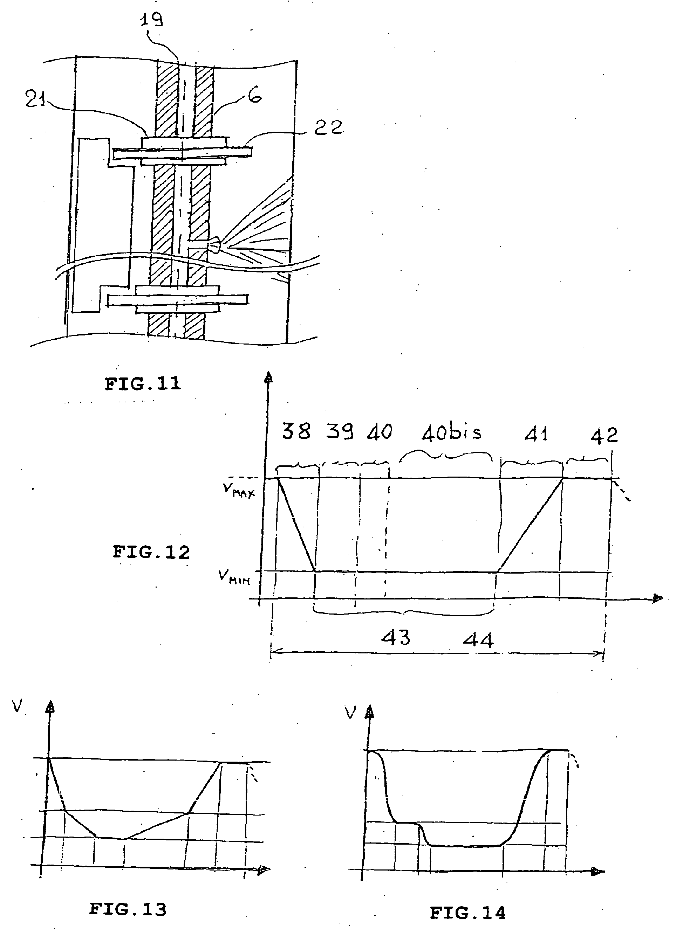

Examples of operating cycles are shown in Figures 12,13 and 14 wherein the angular velocity of the rotor (6) is represented versus the time of different phases during the operation of the dryer, each figure relating to operations in different conditions. To alternate vanes scraping phases (41,42) to not scraping phases (38,43) the variation of the centrifugal force, and therefore of the pressure of the vane blades (30) on the cylinder inner wall (27), caused by the variation of the angular velocity of the rotor (6) is utilised.

The product feeding group (8) secures high flow rates for very short period of time, so allowing for a delivery regime as much as possible "nothing-maximum-nothing". This can be achieved by different ways, among which the most reliable one is made of a pump, an autoclave-tank (of small volume), a high flow ultra quick shutter valve. A flow metering controller device of magnetic type, allows for the most convenient use of the dryer.

The power and control board (9) includes a programmable inverter, a PLC (or a set of timers), an amperometer, a flow controller, and other possible instruments. The power and control board (9) secures the dryer cyclic running.

## Claims

1. A thin film cyclic continuous dryer consisting of: a static body (2) which is made by a cylinder (3), provided with a heating jacket (4) and by an expansion head (5); a rotor (6) consisting of a hollow shaft (19) equipped: with a rotary fitting (24); with a stirrer-type (7) motorization; with a number of sleeves (21) and rims (22) bearing a combination of scraping and smearing vanes (23); a product distribution system provided with a suitable product feeding group (8) and with an automatic valve, placed before the rotary fitting (24), which supplies the product to self-cleaning, self closing nozzles (20) in a pulsating way according to the operating cycle, throughout the hollow shaft (19), the following being the geometry of the different parts of the dryer: rₘ = (0,5÷0,9)r_{c}; rₐ = (0,2÷0,7)r_{c}; rₛ = [(1,01÷1,20)r_{c}]- rₐ; l = 300÷900mm; r_{c} = (0,2÷1)l ; α = 20°÷70° wherein r_{c} is the cylinder inner circumference radius; rₘ is the vane mass barycentric radius; rₐ is the vane hinge radius; r_{c} is the vane slipping out radius; l is the rotor section height; α is the angle between r_{c} and the vane dip; a suitable computerized power and control board (9) activating the rotor (6) according to a cyclic running, suitable to the product to be dried.

2. The thin film cyclic continuous dryer according to claims 1, wherein the product distribution system is formed by self-cleaning, self-closing nozzles (20) with a pressure release system activated by an automatic valve placed on the head of the rotary fitting (24).

3. The thin film cyclic continuous dryer according to any of the previous claims, wherein the vanes (23) are shaped with two bends.

4. The thin film cyclic continuous dryer according to any of the previous claims, wherein the rotor (6) carries both the scraping action vanes and the smearing action vanes.

5. The thin film cyclic continuous dryer according to any of the previous claims, wherein the computerized power and control board (9) provides for the following phases of a cyclic running, adaptable to the product to be dried: rotor slowing down to a predetermined velocity, product feeding and distribution on the inner cylinder wall, product drying always at a determined minimum velocity, rotor velocity increase up to a maximum determined velocity and consequent dried product scraping, therefore cycle repeating and so continuing and the product to be dried feeding group provides for a pulsating feeding with flow and pressure pattern type as much as possible "nothing-maximum-nothing" under predetermined intervals and predetermined deliveries and lengths of time and according to the dryer running cycle.

## Patentansprüche

1. Kontinuierlicher zyklischer Dünnschichttrockner, der aus folgendem besteht:
einem statischen Körper (2), der aus einem Zylinder (3), der mit einem Heizmantel (4) ausgestattet ist, und einem Expansionskopf (5) zusammengesetzt ist; einem Rotor (6), der aus einer Hohlwelle (19) besteht, die mit folgendem ausgestattet ist: mit einem Drehbeschlag.(24); mit einer Rührwerks-Motorisierung (7), mit einer Reihe von Muffen (21) und Absätzen (22), welche eine Kombination aus Schabe- und Schmier-Flügeln (23) tragen; einem Produktverteilungssystem, das mit einer geeigneten Produktspeisegruppe (8) und mit einem automatischen Ventil ausgestattet ist, das vor dem Drehbeschlag (24) angeordnet ist und das Produkt, pulsierend entsprechend dem Betriebszyklus durch die Hohlwelle (19) zu selbstreinigenden, selbstschließenden Düsen (20) liefert, wobei die verschiedenen Teile des Trockners die folgenden Abmessungen aufweisen: rₘ = (0,5 ± 0,9)r_{c}; rₐ = (0,2 ± 0,7)r_{c}; rₛ =[(1,01 ± 1,20)r_{c}] ― rₐ; I = 300 ± 900 mm; r_{c} = (0,2 ± 1)I; α = 20 ° ± 70 °, wobei r_{c} der Radius des Zylinderinnenumfangs ist; rₘ der baryzentrische Radius der Flügelmasse ist; rₐ der Radius des Flügelgelenks ist; rₛ der Radius des Flügelausschwungs ist; 1 die Höhe des Rotorabschnitts ist; α der Winkel zwischen rc und der Flügelneigung ist; wobei ein geeignetes computerisiertes Antriebs- und Steuerpult (9) den Rotor (6) entsprechend einem Zykluslauf aktiviert, der sich für das zu trocknende Produkt eignet.

2. Kontinuierlicher zyklischer Dünnschichttrockner nach Anspruch 1, wobei das Produktverteilungssystem aus selbstreinigenden, selbstschließenden Düsen (20) besteht, mit einem Druckablass-System, das von einem automatischen Ventil, das am Kopf des Drehbeschlags (24) angeordnet ist, aktiviert wird.

3. Kontinuierlicher zyklischer Dünnschichttrockner nach einem der vorangehenden Ansprüche, wobei die Flügel (23) mit zwei Krümmungen geformt sind.

4. Kontinuierlicher zyklischer Dünnschichttrockner nach einem der vorangehenden Ansprüche, wobei der Rotor (6) sowohl die schabend wirkenden Flügel als auch die schmierend wirkenden Flügel trägt.

5. Kontinuierlicher zyklischer Dünnschichttrockner nach einem der vorangehenden Ansprüche, wobei das computerisierte Antriebs- und Steuerpult (9) für die folgenden Phasen eines Zykluslaufs sorgt, der auf das zu trocknende Produkt abgestimmt werden kann: Verlangsamen des Rotors auf eine vorgegebene Geschwindigkeit, Zuführen und Verteilen des Produkts an der Zylinderinnenwand, Trocknen des Produkts immer bei einer bestimmten minimalen Geschwindigkeit, Beschleunigung des Rotors auf eine bestimmte maximale Geschwindigkeit und anschließendes Abschaben des Produkts, Wiederholung und Fortführen des Zyklus, und die Produkteinspeisungsgruppe für eine pulsierende Einspeisung mit einem Strom- und Druckmuster sorgt, das unter vorgegebenen Intervallen und vorgegebenen Abgabemengen und Zeitspannen und entsprechend dem Laufzyklus des Trockners so weit wie möglich "Nichts-Maximum-Nichts" folgt.

## Revendications

1. Séchoir continu cyclique à couche mince consistant en : un corps statique (2) qui est composé d'un cylindre (3), pourvu d'une gaine chauffante (4), et d'une tête d'expansion (5) ; un rotor (6) comprenant un arbre creux (19) équipé : d'un organe rotatif (24) ; d'une motorisation d'un genre d'agitateur (7) ; d'un certain nombre de manchons (21) et de brides (22) comportant une combinaison de palettes (23) de raclage et de frottement ; un système de distribution de produit équipé d'un groupe approprié (8) d'alimentation en produit et d'une valve automatique, placée avant l'organe rotatif (24), qui fournit le produit par impulsions, selon le cycle de fonctionnement, à des buses (20) autonettoyantes et à fermeture automatique, au travers de l'ensemble de l'arbre creux (19), ce qui suit étant la géométrie des différentes parties du séchoir : rₘ = (0,5÷0,9)r_{c} ; rₐ = (0,2÷0,7)r_{c} ; rₛ = [(1,01÷1,20)r_{c}] - rₐ ; l = 300÷900mm ; r_{c} = (0,2÷1)1 ; ά = 20°÷70°, dans lequel r_{c} est le rayon de circonférence interne du cylindre ; rₘ est le rayon barycentrique de la masse de palette; rₐ est le rayon du pivot de la palette ; rₛ est le rayon glissement de la palette ; l est la hauteur de la section de rotor ; ά est l'angle entre r_{c} et l'inclinaison de la palette; un tableau approprié (9) de commande et de puissance informatisée actionnant le rotor (6) selon un actionnement cyclique, approprié au produit à sécher.

2. Séchoir continu cyclique à couche mince selon la revendication 1, dans lequel le système de distribution de produit est formé par des buses (20) autonettoyantes et à fermeture automatique, avec un système de relâchement de pression activé par une valve automatique placée, sur la tête de l'organe rotatif (24).

3. Séchoir continu cyclique à couche mince selon l'une quelconque des revendications précédentes, dans lequel les palettes (23) sont formées avec deux courbures.

4. Séchoir continu cyclique à couche mince selon l'une quelconque des revendications précédentes, dans lequel le rotor (6) comporte à la fois les palettes à action de raclage et les palettes à action de frottement.

5. Séchoir continu cyclique à couche mince selon l'une quelconque des revendications précédentes, dans lequel le tableau (9) de commande et de puissance informatisée met en oeuvre les phases suivantes au cours d'un cycle de fonctionnement, adaptables au produit à sécher : rotor ralentissant jusqu'à une vitesse prédéterminée, alimentation en produit et distribution sur la paroi intérieure du cylindre, séchage du produit toujours à une vitesse minimum déterminée, vitesse du rotor augmentée jusqu'à une vitesse maximum déterminée et raclage consécutif du produit séché, ensuite répétition du cycle et continuation de cette manière et le groupe d'alimentation en produit à sécher fournit une alimentation par impulsion avec une séquence de débit et de pression autant que possible du type "rien-maximum-rien" sous des intervalles prédéterminés et des délivrances prédéterminées et des durées et selon le cycle de fonctionnement du séchoir.
